# EUROPEAN PATENT APPLICATION

(11) **EP 1 035 748 A1**
(43) Date of publication of application: **13.09.2000**
(21) Application number: 99120777.0
(22) Date of filing: 20.10.1999
(51) Int. Cl.: H04Q 7/38, H04Q 7/32

(54) **Switching a mobile terminal to a silent ring mode**

(30) Priority: 12.03.1999 WO PCT/EP99/01641
(71) Applicant: Sony International (Europe) GmbH, 50829 Köln (DE)
(72) Inventor: Winkler, Gregor, SONY INTERNATIONAL (EUROPE) GMBH, Humboldtstrasse 8, 85609 Aschheim (DE)
(74) Representative: Körber, Martin, Dipl.-Phys.

(57) **Abstract**

The present invention relates to a mobile terminal (100, 200) for a wireless transmission system, with receiving means (101, 201) for receiving signals of the wireless transmission system and control means (103, 203) for changing the audible output mode of the mobile terminal (100, 200) into a good manner mode depending on a received good manner signal to protect a predetermined area from disturbing noise of the mobile terminal. In a first alternative, the receiving means (101) of the mobile terminal (100) receives the good manner signal on the basis of the wireless transmission system, in which normal communication information is received. In a second alternative, a further receiving means (202) is provided for receiving the good manner signal on the basis of a wireless protection system different from the wireless transmission system. The present invention further relates to a corresponding protection method and base stations transmitting the good manner signals.

## Description

The present invention relates to a mobile terminal for a wireless transmission system, a method for protecting a predetermined area from disturbing noise of mobile terminals of a wireless transmission system and base stations of a wireless protection system for protecting a predetermined area from disturbing noise of mobile terminals of a wireless transmission system.

Mobile terminals for wireless transmission systems are widely used in the present society. Mobile terminals for wireless transmission systems exist in many different variations. The wireless transmission system can e.g. be a paging system, in which signals or information is one-directionally transmitted from a respective base station to the mobile terminal. The mobile terminal then indicates the received information to its user, e.g. by means of an audible tone, displayed information or the like. Another type of a wireless transmission system is a wireless telecommunication system, e.g. the GSM system, in which information is transmitted bi-directionally between base stations and mobile terminals.

The indication of any kind of event, as e.g. an incoming call, a keypress, Alarm, successful connection to the network, reception of a SMS message, low battery alarm and the like from the mobile terminal to the user is mostly done by means of a loud and distinct audible signal or signals, which cause immediate attention from any person within the audible range. This disturbing noise output from the mobile terminal is therefore regarded more and more as a nuisance for the respective social environment as e.g. in restaurants or the opera. Hereby, the normal operational functions of the mobile terminal are not the primary problem, but only the signalling of an event from the mobile terminal to the user. Almost all modern mobile terminals offer the possibility to switch from audible output signals to visual output signals or a vibration signal. However, these mobile terminals still require a manual input from the user which is quite tiresome and unpratical. Furthermore, in many cases the user of the mobile terminal misses or ignores signs in front of the predetermined area to be protected, as e.g. a restaurant or the opera, indicating that the mobile terminal should not be used within this predetermined area.

EP 0 891 110 A1 discloses a method and a system for preventing a mobile terminal from causing disturbance within a predetermined area, e.g. inside a plane or inside of hospitals. Particularly, the disclosed method comprises the steps of transmitting a deactivation signal from a base station to a mobile terminal and deactivating a use of the output of the mobile terminal in response to the deactivation signal. Thereby, the transmission output is deactivated. The base terminal can either be an ordinary base station or a base station specifically designed for mainly transmitting the deactivation signal. Although EP 0 891 110 A1 describes that the base station should be a specifically designed base station, it is not disclosed how the deactivation signals could be implemented and transmitted in an ordinary telecommunication system or how a mobile terminal can be implemented to protect such an area from disturbing usage of mobile terminals of different mobile networks.

The object of the present invention is therefore to provide a mobile terminal for a wireless transmission system, a method for protecting a predetermined area from disturbing noise of mobile terminals of a wireless transmission system and a base station for protecting a predetermined area from disturbing noise of mobile terminals, which allow to protect a predetermined area from disturbing noise of the mobile terminals automatically in a simple and effective way.

The above object is achieved by a mobile terminal for a wireless transmission system according to claim 1, with receiving means for receiving signals of the wireless transmission system and control means for changing the audible output mode of the mobile terminal in a good manner mode depending on a received good manner signal to protect a predetermined area from disturbing noise of the mobile terminal.

The above object is further achieved by a method for protecting a predetermined area from disturbing noise of mobile terminals of a wireless transmission system according to claim 16, with the steps of broadcasting good manner signals in said predetermined area, and receiving said good manner signals in a mobile terminal so that the audible output mode of the mobile terminal is changed into a good manner mode depending on a received good manner signal to protect said predetermined area from disturbing audible signals output from the mobile terminal.

The above object is further achieved by base stations according to claims 29, 30, 31 and 32.

The good manner mode into which the mobile terminal is switched by means of the good manner signals is a mode in which the predetermined area, e.g. a restaurant, a theatre or the like, is protected from disturbing loud and distinctive audible signals output from the mobile terminal.

Advantageously, the receiving means of the mobile terminal according to the present invention is adapted for receiving a good manner signal on the basis of the wireless transmission system. In other words, the same wireless transmission system is used for the transmission of the normal information signals to be received by the mobile terminal as well as the good manner signals for switching the mobile terminal into the good manner mode. The advantage here is that the mobile terminal does not require any additional hardware, so that the material costs and the size of the device are reduced. If the wireless transmission system is e.g. the GSM system or the like, the good manner signal can be transmitted by means of a broadcast control channel, a paging channel or a location updating message.

According to an alternative advantageous aspect of the present invention, the mobile terminal comprises a second receiving means for receiving the good manner signal on the basis of a wireless protection system different from the wireless transmission system. Here, the normal information signals received by the mobile terminal are transmitted in a wireless transmission system, whereas the good manner signals are transmitted and received in a wireless protection system being different from the wireless transmission system. The advantage of this alternative is that predetermined areas can be efficiently protected from disturbing noise of mobile terminals working in different wireless transmission systems, e.g. different wireless telecommunication systems. The wireless protection system is only present for the transmission of the good manner signals which can be received by all mobile terminals in the predetermined area. In this way, a predetermined area can be protected from disturbing noise of mobile terminals according to the present invention depending on size and time without the constraints of the different existing transmission systems. For example, if some providers of wireless transmission systems do not serve all areas, this alternative of the present invention ensures that all mobile terminals within the predetermined area are still switched into the good manner mode. Further, separating the function of detecting good manner signals from performing functions for the wireless transmission system in the mobile terminal allows to completely disable functions blocks for the wireless transmission system, thereby eliminating any associated power of consumption and undesirable or dangerous interference to other services or devices in the predetermined area to be protected. Nevertheless, each mobile terminal can be switched back into the normal mode automatically after leaving the protected area. The shape and size of the predetermined area to be protected can therefore be determined and chosen independently from the conditions that apply to the wireless transmission system. This can be achieved by choosing the wireless protection system for the transmission of the good manner signals so that their range is determined by the propagation and obstacle penetration characteristics of the good manner signals and/or by applying navigation methods to determine the geographic position of the mobile terminal such as triangulation or path delay information carried by or determined from the good manner signal.

The use of a short wavelength for the wireless protection system (typically decimeters or less) allows to plan/predetermined the range and intended absorption in obstacles to limit the range of the good manner signals. Natural propagation of RF waves causes a path attenuation which is proportional to 4π/λxd², where d is the distance between transmitter and receiver and λ is the wavelength used. Typical home or office environments create even larger wave attenuation typically proportional to 4π/λxd³ above a distance of about 10 meters.

Advantageously, the mobile terminal according to the present invention is a mobile terminal of a wireless paging system, in which normal information messages are transmitted one-directionally from a corresponding paging base station to the mobile terminal.

Alternatively, the mobile terminal according to the present invention is a mobile terminal of a wireless telecommunication system and comprises a transmitting means for transmitting signals in the wireless telecommunication system. In contrast to the above-mentioned paging system, information messages are transmitted bi-directionally in the wireless telecommunication system between one or more base stations and one or more mobile terminals of the wireless telecommunication system. Thus, the receiving means for receiving signals in a wireless transmission system is a receiving means for receiving signals in the wireless telecommunication system. The good manner signals are either transmitted on the basis of the wireless telecommunication system or on the basis of a separate wireless protection system different from the wireless telecommunication system. Advantageously, the control means of the mobile terminal maintains the good manner mode as long as the good manner signals are received. One of the advantages here is that a predetermined area can be protected even when a mobile terminal is switched on inside the predetermined area.

Further advantageously, the control means resets the mobile terminal from the good manner mode back to the original mode upon determining that the time elapsed since the last reception of a good manner signal exceeds a predetermined time threshold. By doing so the good manner signal can be operated in a duty cycle. This is advantageous if the base station transmitting the good manner signal is battery-powered and is therefore constrained in power consumption. Furthermore a short disconnection of the mobile terminal from the good manner signal by fading or interruption does not reset the mobile terminal into the original mode immediately so that the predetermined area can be protected effectively.

Alternatively, the control means, after reception of a first good manner signal and having put the mobile terminal in the good manner mode, resets the mobile terminal from the good manner mode to the original mode upon receiving a second good manner signal. This is advantageous in areas where the access to the area to be protected is limited. The essential advantage is that the number of base stations transmitting the good manner signals can be significantly reduced, since only a small access area, through which the predetermined area is accessed by the users of mobile terminals, has to be covered. This also reduces the risk of influencing other mobile terminals outside the predetermined area by the broadcasted good manner signals.

Advantageously, the good manner mode is a mode in which the volume of audible output signals of the mobile terminal is lowered. This enables that the user being used to the respectively chosen ringing tone still hears the same ringing tone, but at a lower volume so that other people around him in the predetermined area to be protected are not bothered. Depending on a respective location, however, the good manner mode can also be a mode in which audible output signals of the mobile terminal are completely suppressed, so that the mobile terminal, although being in operational state, does not output audible signals at all. The suppressed audible output signals are advantageously replaced by visual or other non-audible signals, which has the advantage that these types of signals can only be noticed by the user of the mobile terminal and are thus not distracting or disturbing other people within the predetermined area.

Advantageously, an information signal is output when the mobile terminal is put in the good manner mode. This information signal may e.g. be an audible signal, a visual signal or a vibration signal or a combination of two or more of these signals. Nowadays, mobile terminals have a high personalisation, especially in view of the indication of incoming information to the user. Every user is used to his specifically chosen alert signals. A sudden change of the alert signal, e.g. when the mobile terminal is put into the good manner mode according to the present invention, could lead to the fact that the user will not recognize and thus ignore the changed alert signal and will miss a call. This is particularly critical in case that the alert signal is changed to a setting which requires a tactile or visual contact with the mobile terminal and the mobile terminal is carried in a bag or the like. To give the user a possibility to notice that the audible signal has changed due to the change of the mobile terminal into the good manner mode and to be able to change the position of the mobile terminal to be able to capture the changed alert signals it is advantageous to output an additional information signal (advantageously audible signal) upon the automatical change of the mobile terminal into the good manner mode according to the present invention.

The above object is further achieved by a base station of a wireless protection system for protecting a predetermined area from disturbing noise of mobile terminals of a wireless transmission system according to claim 29, said wireless protection system being different from the wireless transmission system. This base station is a base station specifically adopted to transmit only good manner signals in a one-directional way and comprises generating means for generating good manner signals for changing the audible output mode of mobile terminals of the wireless transmission system receiving the good manner signals for protecting a predetermined area from disturbing noise of the mobile terminals, transmitting means for transmitting the good manner signals generated in the generating means on the basis of the wireless protection system within the predetermined area so that the good manner signals are received by mobile terminals within the predetermined area to change the audible output mode thereof into a good manner mode and thus to protect the predetermined area.

Further, the above object is achieved by a base station for protecting a predetermined area from disturbing noise of mobile terminals of a wireless telecommunication system according to claim 30, with generating means for generating a good manner signal for changing the audible output mode of the mobile terminals into a good manner mode to protect the predetermined area, transmitting means for transmitting the generated good manner signal within the predetermined area by means of system information messages of a broadcast control channel of the wireless telecommunication system.

In this case, the wireless cellular telecommunication system can be any known or future system using system information messages in a broadcast control channel. System information messages are e.g. used when a mobile terminal is switched on. The mobile terminal will then read the broadcast system information messages transmitted from a base station in a broadcast control channel. The system information messages usually contain information concerning the respective base station and the network, e.g. the timing, the channel structure, the location including the network identification and so on. According to the present invention, these system information messages are used for the transmission of the good manner information to protect the predetermined area from disturbing noise of mobile terminals.

Further, the above object is achieved by a base station for protecting a predetermined area from disturbing noise of mobile terminals of a wireless telecommunication system according to claim 31, with generating means for generating a good manner signal for changing the audible output mode of the mobile terminals to protect the predetermined area from disturbing noise of mobile terminals, and transmitting means for transmitting the generated good manner signal within the predetermined area by means of a paging message of a paging channel of the wireless telecommunication system.

In this case, the wireless cellular telecommunication system can be any known or future system using paging messages in a broadcast control channel. After switching on a mobile terminal within a cell of the telecommunication system, the mobile terminal registers with the corresponding network through the base station of the cell. After a successful registration the mobile terminal listens to the paging channel of this base station in order to be able to react on incoming phone calls. According to the present invention, the paging messages of the paging channel are used for the transmission of the good manner information to protect the predetermined area from disturbing noise of mobile terminals.

Further, the above object is achieved by a base station for protecting a predetermined area from a disturbing noise of mobile terminals of a wireless telecommunication system according to claim 32, with receiving means for receiving a location update request message from a mobile terminal of the wireless telecommunication system, generating means for generating good manner signals for changing the audible output mode of the mobile terminals into a good manner mode to protect the predetermined area from disturbing noise of the mobile terminals, and transmitting means for transmitting the generated good manner signal within the predetermined area to said mobile terminal by means of a location updating answer message in a control channel of the wireless telecommunication system in response to a received location update request.

In this case, the wireless telecommunication system can be any known or future system using registration or location update messages in a control channel. After switching on a mobile terminal within a cell of a telecommunication system, the mobile terminal registers with the corresponding network through the base station of the cell. Thereby, the mobile terminal, after an internal initialisation, checks for an available network. When the mobile terminal finds an available network, the mobile terminal is able to read important information such as the location information. Hereby, three cases can be distinguished. In the first case, the mobile terminal always initiates a registration or a location update procedure after being switched on and having synchronised to the cellular telecommunication system. In this case, the mobile terminal transmits a registration or location update request, e.g. in form of a registration request or the like, to the telecommunication system through the current base station. The telecommunication system, through the base station receives the registration or location update request and transmits a registration or location update accept message to the mobile terminal, the registration or location update accept message containing the location information. In the second case, the mobile terminal starts a registration or location update procedure in case that a certain predefined time has elapsed, even though the mobile terminal did not change its location. The purpose of this is to notify the system that the mobile station is still present. In the third case, the mobile terminal only starts a registration or location update procedure in case that the location area identity has changed since the mobile terminal was last switched off. A location area can consist of one or more physical cells of the wireless telecommunication system, it is also referred to as paging area. In case that the mobile terminal has not changed the location area since it was last switched off, the mobile terminal would not have to send a registration or location update request to the current base station. However, it is an option of the system to request that the mobile terminal transmits information once it is switched off and likewise when it is switched on again, this is then performed through a registration procedure. Therefore, if a mobile terminal according to the present invention is switched on within a predetermined area to be protected from disturbing noise or is entering this predetermined area with a different location identifier, the mobile terminal would initiate a registration procedure which the base station or one of the base stations within the predetermined area would respond to. According to the present invention, the registration or location update answer message from the base station comprises, consists of or relates to good manner information for changing the audible output mode of the mobile terminal into the good manner mode. A periodic location updating can be performed after a period of time predefined by the network within the system information messages, which are constantly sent to all active mobile terminals monitoring the corresponding control channel. When a mobile terminal detects a location area change it will notify the network that it is now located in a different area. As stated above, a mobile terminal could move around within one location area comprising several cells without the need for a registration or a location update by moving from one cell to another. If the mobile terminal moves from one location area to the next location area, however, a location updating has to be performed. Therefore, the predetermined area to be protected from disturbing noise of mobile terminals has to be regarded as a separate different location area in respect to the adjacent location areas of the wireless telecommunication system. If the mobile terminal moves from an adjacent location area into the predetermined area to be protected, a registration or location update will be performed, during which the mobile terminal receives mode change information from the base station within the predetermined area so that the audible output mode of the mobile terminal is changed into the good manner mode.

In the following description, preferred embodiments of the present invention are described relating to the enclosed drawings, in which
figure 1 shows schematically a first embodiment of a mobile terminal according to the present invention,
figure 2 shows schematically a second embodiment of a mobile terminal according to the present invention,
figure 3 shows a first example of how a predetermined area is protected from disturbing noise of mobile terminals according to the present invention,
figure 4 shows a second example of how a predetermined area is protected from disturbing noise of mobile terminals according to the present invention,
figure 5 shows a third example of how a predetermined area is protected from disturbing noise of mobile terminals according to the present invention,
figure 6 shows a fourth example of how a predetermined area is protected from disturbing noise of mobile terminals according to the present invention, and
figure 7 shows a fifth example of how a predetermined area is protected from disturbing noise of mobile terminals according to the present invention.

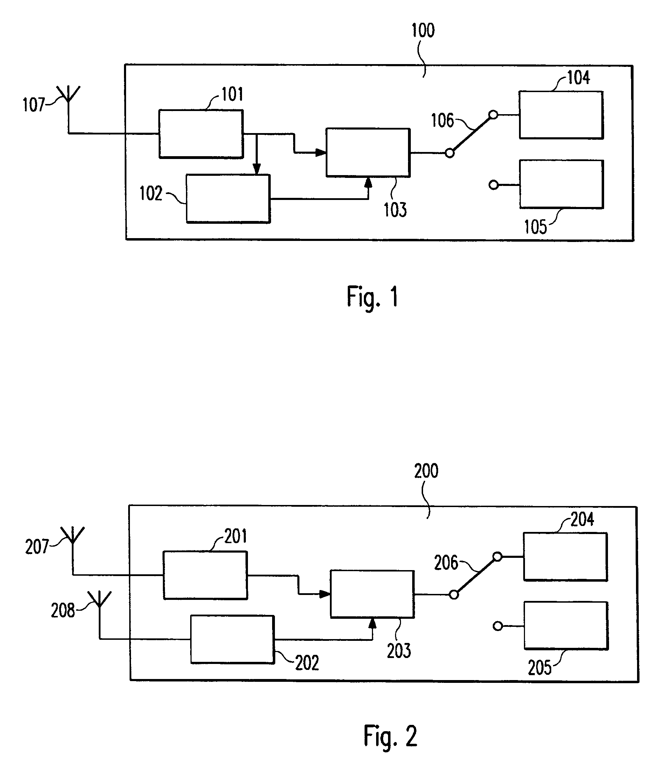

Figure 1 shows schematically a first embodiment of a mobile terminal 100 for a wireless transmission system according to the present invention. The wireless transmission system can be a wireless paging system in which paging signals are one-directionally transmitted from a base station to the mobile terminal 100, or the wireless transmission system can be a wireless telecommunication system in which information is communicated bi-directionally between a base station and the mobile terminal 100.

The mobile terminal 100 comprises a receiving means 101 connected to an antenna 107 for receiving signals of the wireless transmission system. In case that the mobile terminal 100 is a mobile terminal of a wireless telecommunication system, the receiving means 101 is a receiving and transmitting means for receiving and transmitting signals in the wireless telecommunication system. Signals received in the receiving means 101 are supplied to a control means 103 for changing the audible output mode of the mobile terminal 100 into a good manner mode depending on a received good manner signal to protect a predetermined area from disturbing noise of the mobile terminal 100. The mobile terminal 100 further comprises a detecting means 102 for detecting a good manner signal in received signals from the receiving means 101. Upon detecting a received good manner signal in the signals received in the receiving means 101, the detecting means 102 outputs a corresponding indication signal to the control means 103 informing the control means 103 that the mobile terminal 100 is currently in a predetermined area to be protected. The control means 103, which might e.g. be a microprocessor, is connected to a switch means 106. In case that a good manner signal is detected by the detecting means 102, the control means 103 switches the mobile terminal 100 from the current audible output mode, in which the mobile terminal 100 outputs audible signals in case that an event occurs, to a good manner mode, in which the mobile terminal 100 is not disturbing other people in the predetermined area when outputting indication signals to the user. Thus, the switching means 106 is connected to a first signal generator 104 outputting audible signals, i.e. a speaker or a ringer, and to a second signal generator 105 for outputting non-disturbing signals, such as lower volume signals, visible signals, vibration signals or the like. For example, the signal generator 105 can be a vibrator, a light outputting means or the display of the mobile terminal 100. In case that the detecting means 102 detects a good manner signal, the control means 103 switches from the signal generator 104 to the signal generator 105 through the switch means 106 so that the mobile terminal 100 being within the predetermined area is not outputting disturbing signals anymore.

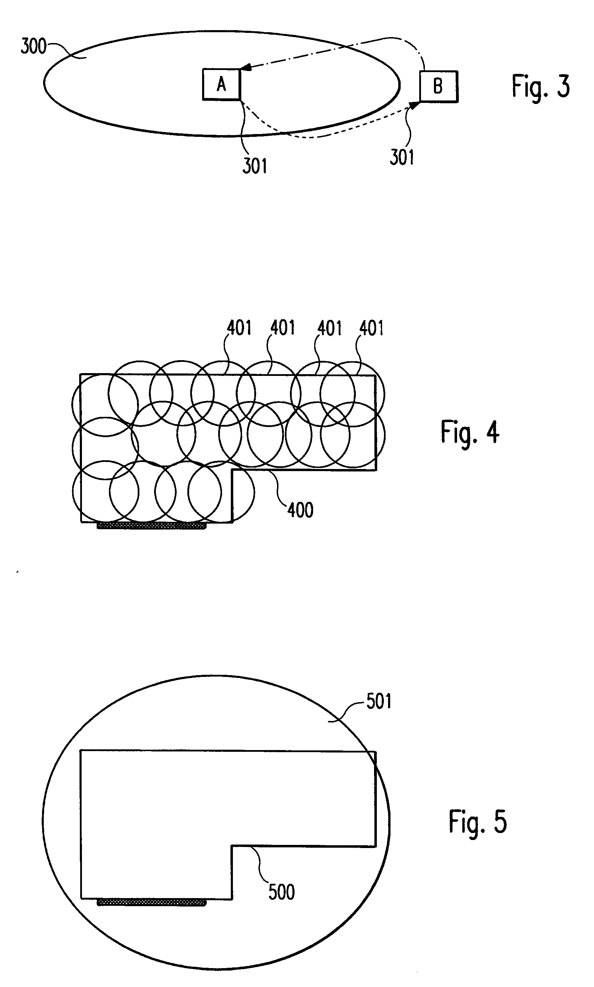

As stated above, the receiving means 101 is adapted for receiving the good manner signal on the basis of the wireless transmission system. If, e.g. the wireless transmission system is a telecommunication system, as e.g. the GSM-system, the receiving means 101 can be adapted for receiving the good manner signal by means of system information messages of a broadcast control channel of the wireless telecommunication system, paging messages of a paging channel of the wireless telecommunication system or a location updating answer message in a control channel of the wireless telecommunication system in response to a location update request transmitted from the mobile terminal 100. In case that the cell size of the wireless telecommunication system is the same size as the predetermined area to be protected or the position of the mobile terminal can be accurately determined by means of the wireless communication system, as e.g. by a three point measurement or a path delay measurement, and match it with the predetermined area, the respective base station sends a good manner signal to the mobile terminal being currently inside of the predetermined area which switches the mobile terminal into the good manner mode. As soon as it is detected that the mobile terminal is outside of the predetermined area, the respective base station sends a respective information to the mobile terminal causing the switching back of the mobile terminal into the original operation mode. Another possibility is that the good manner mode of the mobile terminal 100 is maintained as long as good manner signals are received. Hereby, the control means 103 may reset the mobile terminal 100 from the good manner mode into the original mode upon determining that the time elapsed since the last reception of a good manner signal exceeds a predetermined time threshold. As stated above, the control means 103 may alternatively, after reception of a first good manner signal and having put the mobile terminal 100 in the good manner mode, reset the mobile terminal 100 from the good manner mode to the original mode upon receiving a second good manner signal. These possibilities are explained in more detail in relation to figures 3 to 7.

Figure 2 shows schematically a second embodiment of a mobile terminal 200 for a wireless transmission system according to the present invention, comprising receiving means 201 for receiving signals of the wireless transmission system and control means 203 for changing the audible output mode of the mobile terminal 200 into a good manner mode depending on a received good manner signal to protect a predetermined area from disturbing noise of the mobile terminal 201. In the contrary to the mobile terminal 100 of the first embodiment shown in figure 1, the mobile terminal 200 according to the second embodiment comprises a second receiving means 202 for receiving the good manner signals on the basis of a wireless protection system different from the wireless transmission system. The other elements of the mobile terminal 200 shown in figure 2 are identical to the corresponding elements shown in figure 1 and explained above, i.e. the function of the receiving means 201 corresponds to the function of the receiving means 101, the function of the control means 203 corresponds to the function of the control means 103, the function of the switch means 206 corresponds to the function of the switch means 106, the function of the first signal generator 204 corresponds to the function of the first signal generator 104 and the function of the second signal generator 205 corresponds to the function of the first signal generator 105.

Unlike the mobile terminal 100, the mobile terminal 200 of the second embodiment does not have a detecting means 102, since the good manner signals are received on the basis of the wireless protection system via the second receiving means 202 connected to a second antenna 208. For example, the mobile terminal 200 can be a mobile terminal of a wireless telecommunication system, as e.g. the GSM-system, so that the receiving means 201 is a receiving and transmitting means for receiving and transmitting signals in the wireless telecommunication system. The second receiving means 202 is adapted for receiving the good manner signals in a wireless protection system different from the wireless telecommunication system. Upon receiving a good manner signal, the receiving means 202 outputs an indication signal to the control means 203, which changes the audible output mode of the mobile terminal 200 into the good manner mode as explained above in relation to the mobile terminal 100 shown in figure 1.

It is to be understood, that the mobile terminal 100 shown in figure 1 and the mobile terminal 200 shown in figure 2 further comprise all necessary elements for operating the mobile terminal in the respective wireless transmission system for transmitting and/or receiving normal information signals, like coders, decoders and so on. These other elements, however, are not important for the present invention and are therefore not shown for the sake of clarity.

In the following, possible technical implementations of the wireless transmission system as well as the wireless protection system according to the present invention are described. As explained above, in the first embodiment of the present invention a wireless transmission system is used for the transmission of normal information signals as well as the good manner signals according to the present invention, whereas in the second embodiment, a wireless transmission system is used for the transmission of normal information signals and a wireless protection system different from the wireless transmission system is used for the transmission of normal information signals and a wireless protection system different from the wireless transmission system is used for the transmission of the good manner signals. The wireless transmission system and the wireless protection system can be based on the following principles:
Time Division Multiple Access (TDMA). Example implementations of cellular systems based on this principle are the ETSI Standard GSM, as described in Chapters 3-11 of "An Introduction to GSM" from Redl, Weber, Oliphant, Artech House, 1995; The Standards NADC, IS-54, IS-136, as described in Chapter 12 of this book; and RCR/ARIB PDC. Examples of cordless systems based on this principle are standardized as ETSI DECT, RCR/ARIB PHS, EIA PWT, and Bluetooth.
CDMA (Code Division Multiple Access), e.g. EIA/TIA IS-95, EIA/TIA IS-95A, EIA/TIA IS-95B, as described in Chapter 13 of "An Introduction to GSM" as mentioned above.
TD-CDMA (Time Division-Code Division Multiple Access).
Analog continuous-time transmission methods such as AM, FM, SSB.
Compressed time / time-slot versions of systems based on analog transmission methods.
Broadcast systems (FM, AM, COFDM, e.g. DAB).
Pager systems (POCSAG).
Optical/Infrared systems.
Acoustic/Ultrasonic systems.

Hereafter some advantageous types of implementations of transmission principles for the wireless protection system of the present invention are considered.

It is suggested to use a short wavelength (decimeters and less) to determine a short range of protection around a station, which is transmitting protection signals of a wireless protection system. Absorption in obstacles can be planned as desired. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

Different possible implementations of the protection system have each specific characteristics, advantages and disadvantages.

Radio frequency systems, i.e. systems, which use radio frequency protection signals, yield a good coverage range per transmitted power. A long range is therefore possible, depending on selected transmit power, receiver sensitivity, wavelength, and anticipated interference. An omni-directional radiator can be implemented easily in the protection signal transmitter, resulting in almost circular or spherical ranges. Radio frequency waves pass through some obstacles and encounter inflection, depending on the selected wavelength, therefore a line of sight between transmitter and receiver is usually not required. As an example, the protection system could be implemented using Bluetooth as the basic standard.

Optical systems typically have a short range per transmitted power. Radiators are usually directional such as in the case of an LED. Some gain in range or transmit power reduction can be achieved by concentration of radiation. Omni-directional radiators are big and heavy. Scattering can remove the restrictions of directional radiators at the expense of transmit power. Optical systems can be implemented in a cost efficient way. Particularly transmitters can be very cheap. System approval can be obtained easily. Radiation does not pass through most of the common obstacles such as walls or furniture. That could be a desired feature. A line of sight path between transmitter and receiver is usually required. Optical systems generate few interference to other devices or services. Few health considerations arise from their use.
As an example, the protection system could be implemented using infrared technology e.g. from home appliance remote controls as the basic standard.

Acoustic systems typically have a short to medium range. The required transmit power per range obtained is rather high. Typical systems have a directional radiator such as a piezoelectric speaker. Acoustic waves are scattered, inflected and reflected by most of the usual objects in home or office environments, therefore a line of sight between transmitter and receiver is usually not required. Radiation does not pass through most of the common obstacles such as walls, windows, furniture. System approval can be obtained easily. Acoustic systems generate few interference to other devices or services and only few health considerations arise from their use.
As an example, the protection system could be implemented using ultrasonic technology e.g. from home appliance remote controls as the basic standard.

As a preferred example, the protection system could be implemented using radio frequency technology based on "Bluetooth".
Bluetooth is a standard which is currently still under development. Bluetooth supports wireless ad-hoc voice and data connectivity. Bluetooth is a TDMA/TDD/FHSS system that operates in the unlicensed 2.4GHz ISM band, frequencies for its operation have been allocated worldwide. A range of 10 meters or even 100 meters (using higher transmit power) can be achieved. No line-of-sight is necessary for a successful communication.
Due to features like worldwide ad-hoc connectivity, low power, small size and ease of integration, Bluetooth is very well suited to the requirements of a protection system according to this invention. A Bluetooth subsystem can be implemented on a single silicon chip. A Bluetooth subsystem can also be integrated into existing chip designs.

In figures 3 to 7, different examples of protecting a predetermined area from disturbing noise of mobile terminals 100, 200 according to the present invention are shown. Figure 3 thereby shows a first example of protecting a predetermined area from disturbing noise of mobile terminals, as e.g. the mobile terminals 100 and 200 as explained in relation to figures 1 and 2, respectively. In figure 3, the predetermined area 300, as e.g. a restaurant or an opera building, has to be protected from unwanted audible signals of mobile terminals within the predetermined area. A mobile terminal 101, as e.g. the mobile terminal 100 shown in figure 1 or the mobile terminal 200 shown in figure 2 of a wireless transmission system is carried by a user who can enter the predetermined area 300 to be in a position A and leave the predetermined area 300 to be in a position B. When the mobile terminal 103 is at position A within the predetermined area 300, it receives a good manner signal from a respective base station and switches automatically in the good manner mode. After the user carrying the mobile terminal 101 has left the predetermined area 300 and is at position B, the good manner signal is not detected anymore by the mobile terminal 301, which is switched back from the good manner mode into the original mode. Of course, the switching of the mobile terminal 301 into the good manner mode within the predetermined area 300 should not overwrite personal settings of the mobile terminal, so that, when the mobile terminal 301 has left the predetermined area 300 and is switched back into the original mode, the previous settings should be activated again.

It can be advantageous to implement a number code in the mobile terminal for deactivating the good manner mode. Nevertheless, this manual deactivation should be overwritten every time a next good manner signal is received. This would give the possibility for the user to change the settings even so a second good manner signal deactivating the good manner mode was missed or in case that a good manner signal is accidently received. The number code should preferably be longer than four digits to limit an abuse of this deactivation code.

In figure 4, a second example for protecting a predetermined area 400 from disturbing noise of mobile terminals is shown. In the second example, the predetermined area 400 is e.g. a restaurant, in which a plurality of base stations transmitting a good manner signal within a small range 401 are located. Each base station transmits the good manner signal within a small transmission range, whereby usually the walls of the restaurants have a high attenuation and can be used to reduce the risk of disturbing neighbouring areas. More difficult is the RF leakage into neighbouring regions at openings like windows or doors, whereby the shown example allows to reduce those effects by specifically arranging the plurality of base stations within the restaurant so that the leakage into neighbouring areas is minimized.

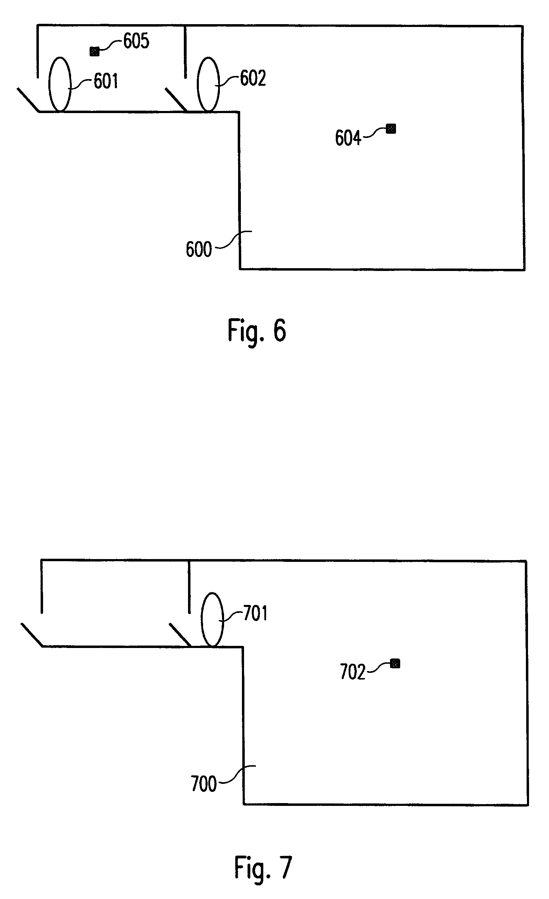

Figure 5 shows a third example for protecting a predetermined area 500, like a restaurant or the like, from disturbing noise of mobile terminals. In this case, a single base station transmitting good manner signals is located in the predetermined area 500, whereby the base station has a transmission range 501 covering the entire area 500. The single base station thus requires a higher transmission power than the plurality of base stations used in the example of figure 4, whereby the risk of leakage into neighbouring areas at openings is increased, but the overall costs are reduced since only one base station has to be used.

Figure 6 shows a fourth example for protecting a predetermined area 600 from disturbing noise of mobile terminals, whereby in this case the predetermined area 600 is an area like a cinema or the like, to which the access is limited, e.g. by having only a single entrance and exit. The advantage is that a very small number of base stations transmitting good manner signals is needed and that only a small access area has to be covered. Further, the risk of influencing other mobile terminals outside the predetermined area to be protected is reduced. By entering the predetermined area 600 to be protected, a mobile terminal 605, is e.g. a mobile terminal 100 or 200 as shown in figure 1 and 2, respectively, passes two base stations having a small transmission range 601 and 602, respectively. The base station covering the transmission range 601 transmits a second good manner signal for deactivating the good manner mode in a receiving mobile terminal. The base station covering the transmission range 602 transmits a first good manner signal which causes an automatic switching of a receiving mobile terminal into the good manner mode. Thus, all mobile terminals entering the predetermined area 600, like a mobile terminal 604, are automatically switched into the good manner mode so that the predetermined area 600 is protected from audible output signals. When leaving the predetermined area 600, the mobile terminal first passes the transmission range 602. Since the mobile terminal is already in the good manner mode, the first good manner signal received from this base station does not have an influence. However, passing the transmission range 601 and receiving the second good manner signal causes an automatic switching of the mobile terminal from the good manner mode into its original mode. In the shown example, special attention has to be drawn to the transmission ranges 601 and 602 and the duty cycles of the base stations transmitting the good manner signals, so that a mobile terminal being carried by a user through the transmission ranges 601 and 602 does not miss the first and the second good manner signal. The shown concept could be used in cinemas, restaurants, conference halls, museums or the like.

Figure 7 shows a fifth example of protecting a predetermined area 700 from disturbing noise of mobile terminals. The fifth example is similar to the fourth example, since it is applicable to predetermined areas with a small access area, as e.g. a single exit and entrance, so that a very small number, e.g. only one base station transmitting good manner signals can be used. The fifth example is particularly advantageous in situations, in which the arrival and departure of the users takes place within a predetermined time period, e.g. theatres, cinemas, operas and conferences. All users entering the predetermined area 700 are entering within a certain time period, e.g. between a first time point t1 and a second time point t2 and are leaving within a certain time period, e.g. between a third time point t3 and a fourth time point t4. The entrance area of the predetermined area 700 is guarded by a base station transmitting good manner signals within a small transmission range 101. The base station transmits the first good manner signal between the first time point t1 and the second time point t2. All mobile terminals carried by the users gassing the transmission range 701 between the first time point t1 and the second time point t2 receive the first good manner signal and are automatically switched into the good manner mode. Thus, all mobile terminals within the predetermined area 700, as e.g. the mobile terminal 702, are in a good manner mode and the area 700 is protected from disturbing audible signals output from the mobile terminals. Upon leaving the predetermined area 700, the base station transmits a second good manner signal between the third time point t3 and the fourth time point t4, so that all mobile terminals carried by their users through the transmission range 701 in that time period are receiving the second good manner signal and thus switched back from the good manner mode into their original mode. Thus, the predetermined area 700 can be protected from disturbing noise from mobile terminals in a very simple, cheap and effective way.

## Claims

1. Mobile terminal (100, 200) for a wireless transmission system, with
receiving means (101, 201) for receiving signals of the wireless transmission system, and
control means (103, 203) for changing the audible output mode of the mobile terminal (100, 200) into a good manner mode depending on a received good manner signal to protect a predetermined area from disturbing noise of the mobile terminal.

2. Mobile terminal (100) for a wireless transmission system according to claim 1,
**characterized in,**
that said receiving means (101) is adapted for receiving said good manner signal on the basis of said wireless transmission system.

3. Mobile terminal (200) for a wireless transmission system according to claim 1,
**characterized by**
a second receiving means (202) for receiving said good manner signal on the basis of a wireless protection system different from said wireless transmission system.

4. Mobile terminal (100, 200) for a wireless transmission system according to one of the claims 1 to 3,
**characterized in**
being a mobile terminal of a wireless paging system.

5. Mobile terminal (100, 200) for a wireless transmission system according to one of the claims 1 to 3,
**characterized in**
being a mobile terminal of a wireless telecommunication system and comprising a transmitting means for transmitting signals of said wireless telecommunication system.

6. Mobile terminal (100, 200) for a wireless transmission system according to one of the claims 1 to 5,
**characterized in,**
that said control means (103, 203) maintains the good manner mode as long as said good manner signals are received.

7. Mobile terminal (100, 200) for a wireless transmission system according to one of the claims 1 to 6,
**characterized in**
that said control means (103, 203) resets the mobile terminal from the good manner mode to the original mode upon determining that the time elapsed since the last reception of a good manner signal exceeds a predetermined time threshold.

8. Mobile terminal (100, 200) for a wireless transmission system according to one of the claims 1 to 6,
**characterized in**
that said control means (103, 203), after reception of a first good manner signal and having put said mobile terminal in the good manner mode, resets the mobile terminal from the good manner mode to the original mode upon receiving a second good manner signal.

9. Mobile terminal (100, 200) for a wireless transmission system according to one of the claims 1 to 8,
**characterized in**
that said good manner mode is a mode in which the volume of audible output signals of the mobile terminal is lowered.

10. Mobile terminal (100, 200) for a wireless transmission system according to one of the claims 1 to 9,
**characterized in**
that said good manner mode is a mode in which audible output signals of the mobile terminal are suppressed.

11. Mobile terminal (100, 200) for a wireless transmission system according to claim 10,
**characterized in**
that said suppressed output signals are replaced by visual or other non audible signals.

12. Mobile terminal (100, 200) for a wireless transmission system according to one of the claims 1 to 11,
**characterized in**
that an information signal is output when the mobile terminal is put in said good manner mode.

13. Mobile terminal (100, 200) for a wireless transmission system according to claim 12,
**characterized in**
that said information signal is an audible signal.

14. Mobile terminal (100, 200) for a wireless transmission system according to claim 12,
**characterized in**
that said information signal is a visual signal.

15. Mobile terminal (100, 200) for a wireless transmission system according to claim 12,
**characterized in**
that said information signal is a vibration signal.

16. Method for protecting a predetermined area from disturbing noise of mobile terminals of a wireless transmission system, with the steps of
broadcasting good manner signals in said predetermined area, and
receiving said good manner signals in a mobile terminal so that the audible output mode of the mobile terminal is changed into a good manner mode depending on a received good manner signal to protect said predetermined area from disturbing audible signals output from the mobile terminal.

17. Method for protecting a predetermined area according to claim 16,
**characterized in,**
that said mobile terminal receives said good manner signal on the basis of said wireless transmission system.

18. Method for protecting a predetermined area according to claim 16,
**characterized in,**
that said mobile terminal receives said good manner signal on the basis of a wireless
protection system different from said wireless transmission system.

19. Method for protecting a predetermined area according to one of the claims 16 to 18,
**characterized in,**
that the good manner mode of said mobile terminal is maintained as long as said good manner signals are received.

20. Method for protecting a predetermined area according to one of the claims 16 to 19,
**characterized in**
that said mobile terminal is reset from said good manner mode to the original mode upon determining that the time elapsed since the last reception of a good manner signal exceeds a predetermined time threshold.

21. Method for protecting a predetermined area according to one of the claims 16 to 19,
**characterized in**
that said mobile terminal, after reception of a first good manner signal and having been put in said good manner mode, is reset from the good manner mode to the original mode upon receiving a second good manner signal.

22. Method for protecting a predetermined area according to one of the claims 16 to 21,
**characterized in**
that in said good manner mode the volume of audible output signals of the mobile terminal is lowered.

23. Method for protecting a predetermined area according to one of the claims 16 to 21,
**characterized in**
that in said good manner mode audible output signals of the mobile terminal are suppressed.

24. Method for protecting a predetermined area according to claim 21,
**characterized in**
that said suppressed output signals are replaced by visual or other non audible signals.

25. Method for protecting a predetermined area according to one of the claims 16 to 24,
**characterized in**
that an information signal is output when the mobile terminal is put in said good manner mode.

26. Method for protecting a predetermined area according to claim 25,
**characterized in**
that said information signal is an audible signal.

27. Method for protecting a predetermined area according to claim 25,
**characterized in**
that said information signal is a visual signal.

28. Method for protecting a predetermined area according to claim 25,
**characterized in**
that said information signal is a vibration signal.

29. Base station of a wireless protection system for protecting a predetermined area from disturbing noise of mobile terminals of a wireless transmission system, said wireless protection system being different from said wireless transmission system, with
generating means for generating good manner signals for changing the audible output mode of mobile terminals of said wireless transmission system receiving said good manner signals for protecting a predefined area from disturbing noise of mobile terminals,
transmitting means for transmitting said good manner signals generated in said generating means on the basis of said wireless protection system within said predetermined area so that said good manner signals are received by mobile stations within said predetermined area to change the ringer mode thereof into a good manner mode and thus to protect the predetermined area.

30. Base station for protecting a predetermined area from disturbing noise of mobile terminals of a wireless telecommunication system, with
generating means for generating a good manner signal for changing the audible output mode of said mobile terminals into a good manner mode to protect said predetermined area,
transmitting means for transmitting said generated good manner signal within said predetermined area by means of system information messages of a broadcast control channel of said wireless telecommunication system.

31. Base station for protecting a predetermined area from disturbing noise of mobile terminals of a wireless telecommunication system, with
generating means for generating a good manner signal for changing the audible output mode of said mobile terminals to protect said predetermined area from disturbing noise of mobile terminals,
transmitting means for transmitting said generated good manner signal within said predetermined area by means of a paging message of a paging channel of said wireless telecommunication system.

32. Base station for protecting a predetermined area from disturbing noise of mobile terminals of a wireless telecommunication system, with
receiving means for receiving a location update request message from a mobile terminal of said wireless telecommunication system,
generating means for generating good manner signals for changing the audible output mode of said mobile terminals into a good manner mode to protect said predetermined area from noise of said mobile terminals,
transmitting means for transmitting said generated good manner signal within said predetermined area to said mobile terminal by means of a location updating answer message in a control channel of said wireless telecommunication system in response to a received location update request.
